# EUROPÄISCHE PATENTSCHRIFT

(11) **EP 3 259 092 B1**
(45) Veröffentlichungstag und Bekanntmachung des Hinweises auf die Patenterteilung: **13.11.2019**
(21) Anmeldenummer: 16705490.7
(22) Anmeldetag: 17.02.2016
(51) Int. Cl.: C04B 35/645, B23K 20/02, B23K 20/233, B23K 20/00, B23K 20/04, B23K 35/00, C04B 37/00, B23K 103/00

(54) **VERFAHREN ZUM DIFFUSIONSBONDING VON SILIZIUMINFILTRIERTEM SILIZIUMCARBID (SISIC)**
METHOD OF DIFFUSION BONDING OF SILICIUM INFILTRATED SILICIUM CARBIDE (SISIC)
PROCÉDÉ DE SOUDAGE PAR DIFFUSION DE CARBURE DE SILICIUM INFILTRÉE PAR SILICIUM (SISIC)

(30) Priorität: 17.02.2015 DE 102015202843
(43) Veröffentlichungstag der Anmeldung: 27.12.2017
(73) Patentinhaber: CeramTec GmbH, 73207 Plochingen (DE)
(72) Erfinder: LEUTHOLD, Alexander, 91550 Dinkelsbühl (DE); BITTERLICH, Dr. Bernd, 91207 Lauf a.d. Pegnitz (DE); BADENHEIM, Dirk, 76131 Karlsruhe (DE); RUDOLF, Jan, 73240 Wendlingen (DE)
(74) Vertreter: Fehrenbacher, Eckhard Anton
(86) Internationale Anmeldenummer: PCT/EP2016/053346
(87) Internationale Veröffentlichungsnummer: WO 2016/131861

(56) Entgegenhaltungen:
- EP-A2- 0 209 672
- DE-A1- 3 003 186

## Beschreibung

Gegenstand der vorliegenden Erfindung ist ein Verfahren zum Fügen von siliziuminfiltriertem SiSiC gemäß dem Oberbegriff des Anspruchs 1 (siehe z.B. DE 30 03 186 A1).

Im Stand der Technik ist das sogenannte "Diffusionsbonden" als eine Methode zum Fügen bekannt, das auch für SiSiC angewendet werden kann. Bei erhöhter Temperatur und mit einem gewissen Anpressdruck "verschweißen" die Fügestellen durch Diffusion einzelner Siliziumatome miteinander. Da nur wenig Materialtransport auftritt, müssen die zu fügenden Oberflächen eine sehr gute Oberflächenqualität aufweisen. Bei einer rauen Oberfläche gibt es nur wenig Kontaktpunkte, an denen eine "Verschweißung" stattfinden kann, wodurch nur eine schwache Verbindung mit geringer Festigkeit entsteht. Im Stand der Technik wird daher beschrieben, dass die Oberflächen vor dem Diffusionsbonden aufwändig poliert werden müssen. Eine andere Möglichkeit ist zwar das Aufbringen einer Zwischenschicht aus z.B. Silizium, um auch rauere Flächen fügen zu können. Da diese Zwischenschicht jedoch nicht beliebig dünn gemacht werden kann, beeinflusst diese die Eigenschaften der Verbindung nach dem Fügen negativ.

Ein weiterer Nachteil der im Stand der Technik beschriebenen Verfahren ist die notwendige sehr präzise Bearbeitung hinsichtlich der Ebenheit geringe Rauhigkeit / Balligkeit der Oberfläche. Passen die zu fügenden Flächen nämlich nicht genau aufeinander, entstehen Spalten, die durch den normalen Diffusionsbondprozess nicht verbunden werden können.

Die Aufgabe der vorliegenden Erfindung bestand deshalb darin, ein Verfahren bereitzustellen, welches die Nachteile der aus dem Stand der Technik bekannten Verfahren nicht aufweist. Insbesondere sollte das erfindungsgemäße Verfahren auch bei raueren Oberflächen und/oder Oberflächen mit einer höheren Balligkeit zu einer ausreichenden Verbindung führen.

Die Aufgabe wird durch das erfindungsgemäße Verfahren gemäß Anspruch 1 gelöst. Bevorzugte Ausführungsformen sind in den Unteransprüchen angegeben.

Die vorliegende Erfindung betrifft ein Verfahren zum Fügen von keramischen Oberflächen von SiSiC-Materialien. Entprechend der Erfindung enthält SiSiC Silizium als eine durchgehende metallische Materialphase. Der Siliziumgehalt des SiSiC-Materials beträgt, entsprechend der Erfindung, < 20 Vol%.

Metalle werden bei bestimmten hohen Temperaturen plastisch verformbar. Erfindungsgemäß vorgesehen ist daher, die Temperatur beim Diffusionsbonden so hoch zu wählen, dass Silizium plastisch verformbar wird. Dies ist bei Temperaturen nahe am Schmelzpunkt von Silizium der Fall. Die Fügetemperatur beträgt deshalb zwischen 1330 und 1360 °C. Die Haltezeit bei Maximaltemperatur beträgt vorzugsweise 15 bis 60 min und muss anhand der gewählten Maximaltemperatur und Bauteilgeometrie eingestellt werden. Durch die plastische Verformung können vor allem Unebenheiten (z.B. Balligkeit oder abweichende Parallelität) in der zu fügenden Fläche ausgeglichen werden. Dabei ist es wichtig, dass das Material zwar plastisch verformbar ist, die Temperatur jedoch so eingestellt wird, dass das Material in seiner Gesamtheit möglichst formstabil bleibt, damit es unter dem Pressdruck zu keiner Verformung des gesamten Bauteils kommt, die die Funktion einschränken oder zu einer aufwändigen Nachbearbeitung führen würde. Das erfindungsgemäße Verfahren wird dabei im Vakuum oder Inertgasatmosphäre durchgeführt.

Das erfindungsgemäße Verfahren stellt keine extremen Anforderungen an die Ebenheit von flächigen Bauteilen. Damit lassen sich auch großflächige Bauteile (z.B. Ronden aus SiSiC mit Durchmessern von ca. 300 mm) fügen (bonden), selbst wenn nach der Oberflächenbearbeitung eine Balligkeit im Mikrometerbereich vorhanden ist. Die Balligkeit des flächigen Bauteils kann bis zu 5 µm pro 100 mm Bauteillänge betragen und beträgt bevorzugt 1 µm pro 100 mm Bauteillänge.

Das erfindungsgemäße Verfahren stellt auch keine extremen Anforderungen an die Oberflächenrauheit. Eine gegebenenfalls erfindungsgemäß vorgesehene Oberflächenbearbeitung durch Läppen wirkt sich jedoch vorteilhaft aus, um einen stabilen Fügeprozess zu ermöglichen.

Aufgrund der hohen Prozesstemperaturen kann die Prozesszeit im Vergleich zum Stand der Technik deutlich verkürzt werden. Die Haltezeit bei Maximaltemperatur beträgt vorzugsweise 15 bis 60 min.

Die Anpressdrücke können beim erfindungsgemäßen Verfahren niedrig gehalten werden. Dies ist vor allem beim Fügen großer Flächen vorteilhaft. Der Anpressdruck beträgt entsprechend der Erfindung dabei 0,1 bis 5,0 MPa, bevorzugt 0,4 bis 1,0 MPa.

Nach dem erfindungsgemäßen Verfahren entsteht eine dünne Fügenaht zwischen den verbundenen Oberflächen. Die Dicke dieser Fügenaht beträgt im Mittel maximal 5 µm, bevorzugt maximal 3 µm. (Messung im Lichtmikroskop am metallographischem Anschliff).

### Beispiel:

Fügen einer runden Scheibe (D: 100mm) mit innenliegenden Kanälen. Das Material ist Rocar SiF. Die Fügeflächen wurden poliert mit 1 µm-Diamantsuspension. Die Balligkeit betrug 6 µm.

Die zwei Scheiben wurden in einer Heißpresse mit folgenden Parametern gefügt: Argon-Atmosphäre, Aufheizrate 8,3 K/min bis zur Maximal-Temperatur 1350 °C, Haltezeit 20 min mit 0,5 MPa Anpressdruck.

Das Bauteil wurde durchgesägt. Die Fügenaht war optisch kaum zu sehen. Nach einer Anschliffpräparation konnte die Fügestelle im Lichtmikroskop charakterisiert werden. Es ist eindeutig zu erkennen, dass zwischen den polierten Flächen sich eine dünne Siliziumschicht mit einer mittleren Dicke von 1-2 µm ausgebildet hat.

## Patentansprüche

1. Verfahren zum Fügen von flächigen dichten Bauteilen aus SiSiC mit einem Siliziumgehalt von < 20 Vol% mittels Diffusionsbonden, **dadurch gekennzeichnet, dass** :
die Bauteile Balligkeiten bis 5 µm pro 100 mm Bauteillänge, bevorzugt 1 µm pro 100 mm Bauteillänge aufweisen dürfen, wobei als Fügetemperatur 1330-1360 °C und als Anpressdruck 0,1 - 5,0 MPa gewählt werden und das SiSiC Silizium als durchgehende metallische Materialphase enthält.

2. Verfahren gemäß Anspruch1, **dadurch gekennzeichnet, dass** es unter Inertgasatmosphäre oder im Vakuum durchgeführt wird.

3. Verfahren gemäß einem der vorhergehenden Ansprüche, **dadurch gekennzeichnet, dass** als Anpressdruck 0,4 - 1,0 MPa gewählt werden.

4. Verfahren gemäß einem der vorhergehenden Ansprüche, **dadurch gekennzeichnet, dass** die Haltezeit bei Maximaltemperatur 15 bis 60 min beträgt.

5. Verfahren gemäß einem der vorhergehenden Ansprüche, **dadurch gekennzeichnet, dass** nach dem Fügevorgang eine Fügenaht von im Mittel maximal 5µm, besonders bevorzugt maximal 3µm Dicke entsteht.

## Claims

1. Method for joining dense planar components made from SiSiC comprising a silicon content of < 20 vol.% by means of diffusion bonding, **characterized in that**:
the components may have cambers of up to 5 µm per 100 mm of component length, preferably 1 µm per 100 mm of component length, 1330-1360°C being selected as the joining temperature and 0.1-5.0 MPa being selected as the contact pressure, and the SiSiC containing silicon as a continuous metal material phase.

2. Method according to claim 1, **characterized in that** it is carried out under an inert gas atmosphere or in a vacuum.

3. Method according to either of the preceding claims, **characterized in that** 0.4-1.0 MPa is selected as the contact pressure.

4. Method according to any of the preceding claims, **characterized in that** the holding time at maximum temperature is 15 to 60 min.

5. Method according to any of the preceding claims, **characterized in that**, after the joining process, a joining seam which has an average thickness of no more than 5 µm, particularly preferably no more than 3 µm, is produced.

## Revendications

1. Procédé d'assemblage, par soudage par diffusion, de composants plats et étanches en SiSiC ayant une teneur en silicium inférieure à 20 % en volume, **caractérisé en ce que** :
les composants peuvent présenter des convexités allant jusqu'à 5 µm par 100 mm de longueur de composant, de préférence 1 µm par 100 mm de longueur de composant, la température de jonction choisie étant comprise entre 1330 et 1360 °C et la pression de contact choisie étant comprise entre 0,1 et 5,0 MPa, et le silicium SiSiC contenant du silicium comme phase matérielle métallique continue.

2. Procédé selon la revendication 1, **caractérisé en ce qu'**il est effectué dans une atmosphère de gaz inerte ou sous vide.

3. Procédé selon l'une des revendications précédentes, **caractérisé en ce que** la pression de contact choisie est comprise entre 0,4 et 1,0 MPa.

4. Procédé selon l'une des revendications précédentes, **caractérisé en ce que** le temps de maintien à la température maximale est compris entre 15 et 60 min.

5. Procédé selon l'une des revendications précédentes, **caractérisé en ce que**, après le processus d'assemblage, un assemblage de jonction d'une épaisseur moyenne maximale de 5 µm, de préférence de 3 µm, est réalisé.
